# EUROPÄISCHE PATENTSCHRIFT

(11) **EP 0 786 484 B1**
(45) Veröffentlichungstag und Bekanntmachung des Hinweises auf die Patenterteilung: **03.05.2000**
(21) Anmeldenummer: 97101005.3
(22) Anmeldetag: 23.01.1997
(51) Int. Cl.: C08G 69/18, C08G 69/20

(54) **Flüssiges System für die anionische Lactampolymerisation**
Liquid system for the anionic lactam polymerisation
Système liquide pour la polymérisation anionique de lactame

(30) Priorität: 25.01.1996 DE 19602684
(43) Veröffentlichungstag der Anmeldung: 30.07.1997
(73) Patentinhaber: EMS-INVENTA AG, 8002 Zürich (CH)
(72) Erfinder: Schmid, Eduard, Dr., 7402 Bonaduz (CH); Eder, Roman, 70794 Filderstadt (DE)
(74) Vertreter: Hotz, Klaus, Dipl.-El.-Ing./ETH

(56) Entgegenhaltungen:
- EP-A- 0 438 762
- DE-A- 1 495 132
- DE-A- 1 495 848
- DE-A- 1 520 605
- DE-A- 2 230 732
- US-A- 3 575 938

## Beschreibung

Die vorliegende Erfindung betrifft ein bei Raumtemperatur flüssiges System für die anionische Lactampolymerisation.

Polyamide werden gemäss dem relevanten Stand der Technik meist nach der Methode der sogenannten hydrolytischen Polymerisation aus Lactamen in der Schmelze bei Temperaturen von ca. 200 bis 320°C hergestellt, bei der zur Ringöffnung des Lactams oft eine Druckphase unter Wasserzusatz vorgeschaltet ist. Diese Reaktion verläuft langsam. Das Reaktionsprodukt, bevorzugt ein Granulat, wird in einem Nachfolgeschritt, z.B. im Spritzgussoder Extrusionsverfahren, zu Gebrauchsgegenständen umgeformt.

Auch starke Basen, die z.B. zur Bildung von Metall-Lactamat führen, können die Umwandlung von Lactam zum Polyamid bewirken Die entsprechende Polymerisationsreaktion verläuft langsam und wurde abgelöst durch die aktivierte anionische Lactampolymerisation, bei der die Reaktion stark beschleunigt ist und die Polymerisationstemperatur unter den Polymerschmelzpunkt abgesenkt werden kann. Bei diesem Verfahren werden der Lactamschmelze Katalysator und Aktivator getrennt zugefügt.

Üblicherweise liegt dabei der Katalysator als Feststoff, z.B. als Alkali- oder als Erdalkali-Lactamat vor. Auch viele der aktivierenden sogenannten Cokatalysatoren wie z.B. Carbodiimide und verkappte lsocyanate, sind Feststoffe. Der Nachteil der freien Isocyanate, von denen viele flüssig sind, ist ihre hohe Toxizität.

Die anionische Lactampolymerisation und die aktivierte anionische Lactampolymerisation sowie alle Aspekte der Polyamidsynthese und die entsprechenden Anwendungen sind z.B. beschrieben im Kunststoffhandbuch Band VI, Polyamide, C.Hanser Verlag, München.

Die aktivierte anionische Lactampolymerisation wird im allgemeinen zur Herstellung von sog. Gussteilen oder von grossvolumigem Halbzeug, wie Profilen, bevorzugt nach dem sogenannten 2-Topfverfahren durchgeführt.
Dabei werden volumengleiche, den Katalysator bzw. den Cokatalysator enthaltende Lactamschmelzen hergestellt, zusammengefügt und intensiv vermischt. Dadurch wird die Polymerisation gestartet, und die Schmelze kann unmittelbar danach, z.B. im sogenannten Monomerguss-Verfahren, zum Fertigteil verarbeitet werden.
Dazu muss möglichst darauf geachtet werden, dass
- die Lactamschmelzen wasser- und sauerstofffrei sind,
- die Misch- und Verarbeitungsschritte unter Inertgas erfolgen und
- die Schmelzen rasch verarbeitet werden, da sie sehr schnell altern.

Um die rasche und homogene Verteilung des Katalysators, z.B. von Magnesium- oder Natrium-Lactamat, in der Lactamschmelze zu erleichtern, wurden sogenannte Flüssigkatalysatorsysteme entwickelt.

In der ***DE-A-22 30 732*** wird dabei auf die Schwierigkeiten eingegangen, welche die Zugabe von Katalysator in fester Form, z.B. von Metall-Lactamat, zur aktivatorhaltigen Lactamschmelze verursacht. Sind schnelles Lösen und gleichmässiges Verteilen des Katalysators nicht gewährleistet, entsteht ein inhomogenes Polymer.

In der ***DE-A-14 95 132*** wird zur Problemlösung eine bei 60°C flüssige, lagerfähige Lösung von Alkali-Lactamat in Lactam vorgeschlagen, die zusätzlich 0,3 bis 5,0 Gew.% eines schwerflüchtigen Amins enthält.

Eine Katalysatorlösung von Metall-Lactamat in einem N-disubstituierten Carbonsäureamid, insbesondere in N-Methylpyrrolidon, ist in der ***US-A- 3,575,938*** beschrieben. Die verbesserte Zugabe und Verteilung dieser Katalysatorlösung in eine aktivierte Lactamschmelze erlaubt auch die Herstellung mineralgefüllter Produkte.
Diese Katalysatorlösungen verschlacken sofort an der Luft und sind bei Raumtemperatur nicht flüssig. Sie müssen vor der Verwendung aufgeschmolzen werden.

Nach der Lehre der ***DE-A-22 30 732*** muss die das Verfahren störende Krustenbildung, die Katalysatorlösungen aus Alkali-Lactamat in 2-Pyrrolidon rasch zeigen, durch Zugabe höherer Alkohole verhindert werden. Diese Lösungen werden ebenfalls unter 20°C fest.

In der ***EP-A-0 438 762*** sind Katalysatorlösungen mit hoher Lagerstabilität auch bei tiefen Temperaturen beschrieben, die einen raschen Umsatz ermöglichen und zu Polyamid mit relativ niedrigen Restgehalt an Extrakt führen. Sie bestehen aus Lactam, z.B. 2-Pyrrolidon, speziellen Glykolen, Kohlenwasserstoffen und enthalten gegebenenfalls Amin. Die niedrigen Siedepunkte einzelner Komponenten der Lösungen schränken jedoch die Verwendung stark ein.

Im zitierten Stand der Technik müssen jedoch zur Durchführung der anionischen Lactampolymerisation der Aktivator und die Lösung des Katalysators immer separat verwendet werden.
Damit sind erhebliche verfahrenstechnische Nachteile verbunden: In einem vorgezogenen Verfahrensschritt muss der Lactamschmelze zunächst der Aktivator zugesetzt werden, bevor mit Zugabe der Katalysatorlösung die Reaktion ausgelöst werden kann.

Die wesentlichen Nachteile der Verfahren des Standes der Technik liegen somit in der Notwendigkeit
- der getrennten Zugabe von Aktivator und Katalysatorlösung zur Lactamschmelze in diskontinuierlichen Verfahren, bzw.
- der Verwendung von zwei Vorratsbehältern, nämlich je einem Behälter für die aktivierte beziehungsweise für die katalysatorhaltige Lactamschmelze, die beide nur eine beschränkte Lagerdauer besitzen.

Der vorliegenden Erfindung war somit die Aufgabe gestellt, die Nachteile des Standes der Technik durch ein geeignetes, bei Raumtemperatur flüssiges, lagerstabiles Katalysator/Aktivator-System zu überwinden, das allein in der Lage ist, die Polymerisation des Lactams auszulösen, das kurze Polymerisationszeiten ermöglicht und zu Polylactamen von hoher Qualität führt.

Diese Aufgabe wird durch folgendes bei Raumtemperatur flüssige System für die anionische Lactampolymerisation und seine Verwendung zur Auslösung der Lactampolymerisation gelöst:

Flüssigsystem für die anionische Laktampolymerisation, bestehend aus dem Umsetzungsprodukt von:
a) 20 bis 80 Gew.- Teilen mindestens einer N,N'- disubstituierten
   Harnstoffverbindung der Formel I 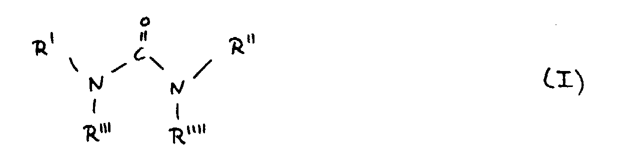 wobei R' und R" gleiche oder unterschiedliche Alkylreste mit bis zu 12 C- Atomen sind,
   und R"' und R"" gleiche oder unterschiedliche Alkylreste mit bis zu 8 C- Atomen sind,
   welche gegebenenfalls gemäss Formel II miteinander verbunden sind, 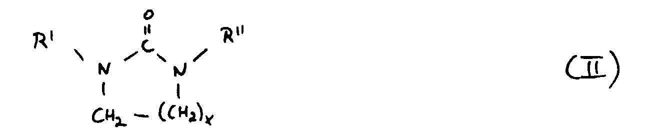 wobei x=1 bis 8 und R' bzw. R" ein C1- bis C12- Alkylrest ist,
b) 5 bis 40 Gew.- Teilen mindestens eines Alkali- und/oder Erdalkali- Lactamates,
c) 10 bis 40 Gew.- Teilen mindestens einer für die anionische Lactampolymerisation als Aktivator wirkenden Verbindung,
d) 2 bis 30 Gew.- Teilen mindestens eines cyclischen Carbonsäureamides,
wobei sich die Anteile von a), b), c) und d) auf 100 Gew. Teile ergänzen und
e) gegebenenfalls zusätzlichen Additiven.

Sie wird insbesondere gelöst, durch ein flüssiges, lagerstabiles System, das Aktivator und Katalysator zugleich enthält, dadurch die getrennte Verwendung von Aktivator und Katalysator unnötig macht und der anionischen Laktampolymerisation eine wesentliche Erweiterung der Anwendungen, der Rezepturen und der Verfahren sichert.

Ueberraschenderweise wurde gefunden, dass die als Aktivatoren geeigneten Verbindungen, wie verkappte, insbesondere durch Lactam verkappte Isocyanate, Carbodiimide und Oxazoline, insbesondere Fettalkylbisoxazoline, in der Lage sind, in Gegenwart von Katalysator mit geeigneten Lösungsmitteln bei Raumtemperatur flüssige, an trockener Luft lagerstabile Systeme zu bilden.

Das einer wasserfreien Lactamschmelze zuzusetzende erfindungsgemässe flüssige, wasserfreie System besteht somit im wesentlichen aus dem Umsetzungsprodukt von
a) mindestens einer N-disubstituierten Harnstoff-Verbindung, die durch ihre Substituenten R, R', R" und R"' einen heterocyclischen Ring bilden kann, als Basiskomponente und Lösungsmittel,
b) mindestens einem Alkali- oder Erdalkali-Lactamat als Katalysator,
c) mindestens einer die anionische Lactampolymerisation aktivierenden Verbindung,
d) mindestens einem cyclischen Carbonsäureamid,
wobei sich a, b, c und d auf 100 Gew.-Teile ergänzen, und
e) gegebenenfalls zusätzlichen Additiven, die die Polymerisation nicht oder nicht wesentlich beeinträchtigen und mit den Komponenten a), b) und c) verträglich sind.

N,N'-dialkylierte Harnstoff-Verbindungen a) sind Stand der Technik.

Beispiele solcher Verbindungen sind beschrieben in den "BASF-Firmenschriften BASF-Zwischenprodukte 1993".

Bevorzugte N,N'-alkylsubstituierte Harnstoff-Verbindungen sind Tetramethylharnstoff und Tetrabutylharnstoff.

Besonders bevorzugt sind Harnstoff-Verbindungen der Formel **II** 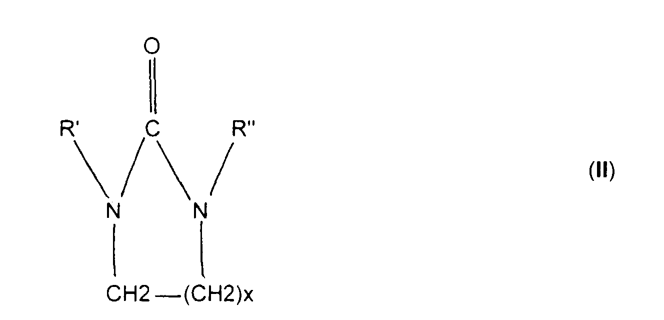 in denen x = 1 bis 8 und R' und R'' gleiche oder unterschiedliche Reste mit 1 bis 12 C-Atomen sind.
Dabei sind N,N'-alkylierte Harnstoff-Verbindungen mit x = 1 oder 2 besonders bevorzugt.

Als R' oder R'' sind kurzkettige Alkylreste mit 1 bis 8 C-Atomen und insbesondere Methylreste bevorzugt.

Der Anteil der Harnstoff-Verbindung a) beträgt bevorzugt 30 bis 70 Gew.-Teile.

Der Anteil des Lactamates b) liegt bevorzugt zwischen 5 und 25 Gew.-Teilen, dabei sind als Alkali-Lactamate Natrium-Lactamate und insbesondere Natrium-Caprolactamat und Natrium-Laurinlactamat und als Erdalkali-Lactamate Magnesium-Lactamate, insbesondere Magnesium-Caprolactamat und Magnesium-Laurinlactamat bevorzugt.

Die Herstellung der Alkali- und Erdalkali-Lactamate ist Stand der Technik und beispielhaft beschrieben in ***US-A- 3,575,938.***

Natrium-Caprolactamat ist ein Handelsprodukt der Fa.Pacast AG, CH-7320 Sargans und der Fa. L Brüggemann, D-74076 Heilbronn.

Bevorzugte aktivierende Verbindungen c) sind verkappte, insbesondere mit Lactamen, wie Caprolactam verkappte Isocyanate- und Polyisocyanate, darunter besonders Diphenylmethandiisocyanate. Hexamethylendiisocyanat, Toluoldiisocyanat, Isophorondiisocyanat, mund p- Xylidendiisocyanat oder Phenylisocyanat, Carbodiimide und Polycarbodiimide. wie N,N'-Diisopropylcarbodiimid, N,N'-Di-(o-tolyl-)carbodiimid, N,N'-Dicyclohexylcarbodiimid, 2,2',6,6'-Tetraisopropyldiphenylcarbodiimid und Poly-(2,2'-diisopropyl-)p-phenylencarbodiimid sowie acylierte Lactame, darunter besonders acetyliertes Capro- und Laurinlactam sowie Oxazoline, Oxazolone, N-substituierte 2-Oxazolidone, Fettalkyl-oxazoline, Hydroxifettalkyl-oxazoline und mit Hydroxisäuren, wie Rizinolsäuren hergestellte Oxazoline und ihre Umsetzungsprodukte mit Isocyanaten und Diisocyanaten.
Diese sind beschrieben in *Farben und Lacke, 1993 /11, S. 911 bis 915.*

Die cyclischen Carbonsäureamide sind bevorzugt Lactame oder alkylierte Lactame, N-Acetylanilin, N-Acetylpiperidin oder Di-N-acetylpiperazin.

Gegebenenfalls vorhandene Additive e) mit verfahrens- oder verwendungsbedingten Eigenschaften sind aus dem Stand der Technik bekannt:
Carbonsäureester, Ester von Säuren des Phosphors, Verarbeitungshilfsmittel, sowie Di-N-alkylform- oder acetamid oder
e1) Zusätze, die die Eigenschaften des Polylactams beeinflussen, wie Hitze- und Lichtstabilisatoren, Antioxydantien, Tracer, Duftstoffe, Farbstoffe, Pigmente, optische Aufheller, Weichmacher und Entformungsmittel.
e2) Zusätze, die den Polymerisationsverlauf direkt beeinflussen, wie Amine, Alkohole und Glykole. Ihre Wirkung ist beschrieben in ***US 3,017,391.***

Bevorzugte flüssige Systeme sind:

### System 1:

a) 45 bis 70 Gew.-Teile einer N,N'-methylierten cyclischen C2- oder C3-Alkylen - Harnstoff-Verbindung,
b) 5 bis 30 Gew.-Teile Alkali-Caprolactamat,
c) 5 bis 40 Gew.-Teile lactamverkapptes Diisocyanat,
d) 2 bis 30 Gew.-Teile Caprolactam.

### System 2:

a) 45 bis 70 Gew.-Teile einer N,N'-methylierten cyclischen C2- oder C3-Alkylen-Harnstoff-Verbindung,
b) 5 bis 40 Gew.-Teile Alkali-Caprolactamat,
c) 10 bis 40 Gew.-Teile Mono- oder Polycarbodiimid,
d) 2 bis 30 Gew.-Teile Caprolactam,

### System 3:

a) 45 bis 70 Gew.-Teile einer N,N'-methylierten cyclischen C2- oder C3-Alkylen-Harnstoff-Verbindung,
b) 5 bis 40 Gew.-Teile Natrium-Caprolactamat,
c) 10 bis 40 Gew.-Teile Oxazolin-Verbindung,
d) 2 bis 30 Gew.-Teile Caprolactam.

Das erfindungsgemässe System ist eine bei Raumtemperatur flüssige, unter Inertgas beziehungsweise in trockener Luft stabile und homogene Flüssigkeit, welche bei Zugabe zu einer wasserfreien Lactamschmelze schnell und homogen gelöst und verteilt werden kann und dabei die aktivierte anionische Lactampolymerisation auslöst.

Die Erfindung beinhaltet auch die Verwendung des erfindungsgemässen Systems zur Durchführung der anionischen Lactampolymerisation. Es wird 100 Gew.-Teilen reinem, absolut wasserfreien Lactam, bevorzugt in Mengen von 0,5 bis 15 Gew.-Teilen, zugegeben.
Dabei entstehen Polylactame, wie Polycaprolactam, Polyönantholactam oder insbesondere Polylaurinlactam von guter, Qualität und hochwertigem, variationsfähigen Eigenschaftsprofil.

Die Herstellung des erfindungsgemässen Flüssigsystems wird nachfolgend beispielhaft erläutert:

### BEISPIELE 1 bis 5

Die Beispiele 1 bis 5 beschreiben die Herstellung von Flüssigsystemen.
Zur Herstellung des Flüssigsystems ist das Arbeiten unter Schutzgas-Atmosphäre angezeigt.
In einem Gefäss mit Innentemperaturmessung wird die Komponente a) vorgelegt und auf 30
bis maximal 70 °C erwärmt.
Danach wird unter Rühren die Komponente c) eingetragen und homogen eingemischt. Nach entstehen einer klaren Lösung werden unter Kontrolle der Temperatur, welche 70 °C nicht überschreiten darf, die Komponente b) und anschliessend gegebenenfalls die Additive e) zugegeben.
Die resultierenden Lösungen sind bei Raumtemperatur flüssig und lagerstabil.

**Tabelle 1:**

| **FLÜSSIGSYSTEME** | | | | | | | | | | |
|---|---|---|---|---|---|---|---|---|---|---|
| **No** | **Komponente a)** | **Teile a)** | **Komponente b)** | **Teile b)** | **Komponente c)** | **Teile c)** | **Komponente d)** | **Komponente.e)** | **Teile e)** | **Bemerkung** |
| **1** | DMI | 50 | Na-CL | 25 | CD | 25 | *) | -------------- | ------- | orangegelbe, klare Flüssigkeit |
| **2** | DMI | 60 | Na-LL | 20 | CD | 20 | *) | ------------- | ------- | leicht rote, klare Flüssigkeit |
| **3** | DMPU | 50 | Na-CL | 30 | CL-MDI | 20 | *) | ------------- | ------- | gelbe, klare Flüssigkeit |
| **4** | DMPU | 48 | Na-CL | 19 | CL-MDI | 19 | *) | PA | 14 | gelbe, klare Flüssigkeit |
| **5** | DMPU | 30 | Na-CL | 35 | Bis-Ox | 35 | *) | ------------- | ------- | gelbe, klare Flüssigkeit |

| | | | | | | | | | | |
|---|---|---|---|---|---|---|---|---|---|---|
| *) Lactam als ca 70 Gew % - Anteil aus dem Natriumcaprolactamat bzw Natriumlaurinlactamat der Komponente b) DMPU: N,N'-Dimethylpropylenharnstoff DMI: N,N'-Dimethylethylenharnstoff Na-CL: Natrium-Caprolactamat in Caprolactam, (ca.30 Gew.% Natriumlactamat / ca. 5 Gew.% Natriumgehalt) Pacast AG, Sargans (CH) Na-LL: Natrium-Laurinlactamat in Laurinlactam, ca. 30% Gew.Na-Laurinlactamat. CL-MDI: Caprolactam verkapptes Methylendiisocyanat, Grilbond IL6 (R), Ems-Chemie AG, Domat/Ems (CH) Bis-Ox: Ricinyl-bisoxazolin, Loxamid 8523 (R), Henkel KG, Düsseldorf ( BRD ) CD: Bis-(2,6-diisopropylphenyl)carbodiimid, Stabilisator 7000 (R), Raschig AG, Ludwigshafen ( D ) PA: Phenolisches Antioxidant, Irganox 1135, Ciba-Geigy AG, Basel ( CH ) | | | | | | | | | | |

### BEISPIELE 6 bis 10

Zur Verwendung der Flüssigsysteme zur Durchführung der anionischen Lactampolymerisation kann nach folgender allgemeinen Vorschrift verfahren werden.
In einem Gefäss mit Innentemperaturmessung wird unter Stickstoff-Atmosphäre eine Lactam-Schmelze vorgelegt und unter kontrollierter Temperatur und Rühren das Flüssigsystem eingetragen.
Als Vergleichszeit t, um den Ablauf der Polymerisation zu beschreiben, wird die Zeitspanne bis zum Unrührbarwerden der Schmelze verwendet.
Anschliessend wird die Schmelze 60 min bei 175°C auspolymerisiert.

**Tabelle 2**

| Verwendung der Flüssigsysteme der Beispiele 1 bis 5 zur Lactampolymerisation | | | | | | | | |
|---|---|---|---|---|---|---|---|---|
| **No** | **Lactam** | **Teile** | **System gemäss** | **Teile** | **Schmelzetemperatur** | **Vergl. Zeit t** | **DSC- Smp Polymer** | **Bemerkung** |
| **6** | Laurinlactam | 100 | Beispiel **1** | 3 | 175°C | 80sec | 175°C | keine Verfärbung |
| **7** | Laurinlactam | 100 | Beispiel **2** | 3 | 175°C | 60sec | 172°C | keine Verfärbung |
| **8** | Laurinlactam | 100 | Beispiel 3 | 3 | 175°C | 22sec | 172°C | keine Verfärbung |
| **9** | Laurinlactam | 100 | Beispiel **4** | 3 | 175°C | 90sec | 170°C | keine Verfärbung |
| **10** | Laurinlactam | 100 | Beispiel **5** | 3 | 175°C | 10sec | 171°C | keine Verfärbung |

### Beispiele 11 bis 15

Wie in den Beispielen 1 bis 5 wurden weitere Flüssigsysteme hergestellt, die als Komponente a) nicht-cyclische Harnstoff-Verbindungen beinhalten.

Ihre Zusammensetzung ist aus Tabelle 3 und ihr Polymerisationsverhalten aus Tabelle 4 zu entnehmen.
Dazu wurde die Schmelze bei 200 °C polymerisiert und die Zeit tᵤ bis zum Unrührbarwerden gemessen und dann noch während 20 Minuten weiterpolymerisiert.

**Tabelle 3:**

| **FLÜSSIGSYSTEME** mit N-alkylierten nicht-cyclischen Harnstoffverbindungen | | | | | | | | | |
|---|---|---|---|---|---|---|---|---|---|
| **No** | **Komponente a)** | **Teile a)** | **Komponente b)** | **Teile b)** | **Komponente c)** | **Teile c)** | **Komponente d) *)** | **Teile d)** | **Bemerkung** |
| **11** | TBH | 30 | Na-CL | 20 | CD | 20 | NMP | 30 | klare Flüssigkeit |
| **12** | TEH | 55 | Na-LL | 25 | CL-MDI | 20 | ----------- | ----- | klare Flüssigkeit |
| **13** | TMH | 40 | Na-CL | 20 | CL-MDI | 20 | NMP | 20 | klare Flüssigkeit |
| **14** | TMH TBH | 30 30 | Na-CL | 20 | Bis-Ox | 20 | | ----- | klare Flüssigkeit |
| **15** | TMH TBH | 20 20 | Na-CL | 20 | CD | 20 | NMP | 20 | klare Flüssigkeit |

| | | | | | | | | | |
|---|---|---|---|---|---|---|---|---|---|
| *) zur Komponente d) gehört ausserdem noch der 70 Gew.% Anteil Caprolactam der Komponente b). TBH: Tetrabutylharnstoff BASF, Ludwigshafen (D) TEH: Tetraethylharnstoff Fluka AG, Buchs (CH) TMH: Tetramethylharnstoff Fluka AG, Buchs (CH) Na-CL: Natrium-Caprolactamat in Caprolactam, Natriumlactamat-Gehalt 30 Gew.%, Pacast AG, Sargans (CH) CD: Bis-(2,6-diisopropylphenyl)carbodiimid, Stabilisator 7000 (R), Raschig AG, Ludwigshafen (D) CL-MDI: Caprolactam verkapptes Methylendiisocyanat, Grilbond IL6 (R), Ems-Chemie AG, Domat/Ems (CH) Bis-Ox: Ricinyl-bisoxazolin, Loxamid 8523 (R), Henkel KG, Düsseldorf (BRD) NMP: N-Methylpyrrolidon BASF, Ludwigshafen (D) | | | | | | | | | |

**Tabelle 4:**

| Verwendung der Flüssigsysteme der Beispiele **11** bis **15** zur Lactampolymerisaion | | | | | | | | |
|---|---|---|---|---|---|---|---|---|
| **No** | **Lactam** | **Teile** | **System Beispiel** | **Teile** | **Schmelzetemperatur** | **Zeit t**_{**u**} **sec.** | **Smp. °C** | **relative Viskosität** |
| **11** | LL | 100 | 11 | 3 | 200 | 200 | 173 | 3.05 |
| **12** | LL | 100 | 12 | 3 | 200 | 10 | 189 | nmb |
| **13** | LL | 100 | 13 | 3 | 200 | 8 | 166 | nmb |
| **14** | LL | 100 | 14 | 3 | 200 | 14 | 166 | 6.0 |
| **15** | LL | 100 | 15 | 3 | 200 | 200 | 172 | 2.90 |
| tᵤ : Zeit bis zum Unrührbar-Werden der Schmelze Smp °C: DSC-Schmelzpunkt des Polymeren Relative Viskosität des Polymeren: 0,5%-ig in m-Kresol nmb: unter praktischen Bedingungen Viskosität nicht messbar = sehr hohe Viskosität | | | | | | | | |

## Patentansprüche

1. Flüssigsystem für die anionische Lactampolymerisation, bestehend aus dem Umsetzungsprodukt von
a) 20 bis 80 Gew. Teilen mindestens einer N,N'-disubstituierten Harnstoffverbindung der Formel I 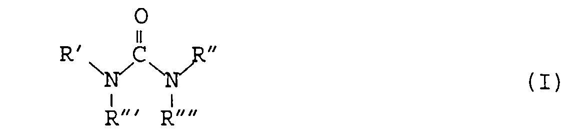 wobei R' und R" gleiche oder unterschiedliche Alkylreste mit bis zu 12 C-Atomen sind,
und R"' und R"" gleiche oder unterschiedliche Alkylreste mit bis zu 8 C-Atomen sind, welche gegebenenfalls gemäss Formel II miteinander verbunden sind, 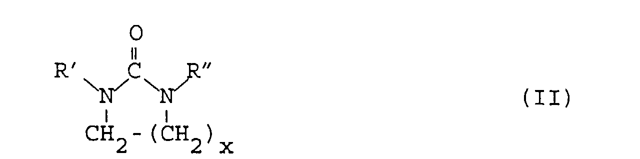 wobei x=1 bis 8 und R' bzw. R" ein C1- bis C12-Alkylrest ist,
b) 5 bis 40 Gew.-Teilen mindestens eines Alkali- und/oder Erdalkali-Lactamates,
c) 10 bis 40 Gew.-Teilen mindestens einer für die anionische Lactampolymerisation *als Aktivator wirkenden* Verbindung,
d) 2 bis 30 Gew.-Teilen mindestens eines cyclischen Carbonsäureamids, wobei sich die Anteile von a), b), c) und d) auf 100 Gew.-Teile ergänzen und das System bei Raumtemperatur flüssig ist und
e) gegebenenfalls zusätzlichen Additiven.

2. System nach Anspruch **1**,
**dadurch gekennzeichnet, dass**
der Anteil der Harnstoffverbindung a) 30 bis 70 Gew.-Teile beträgt

3. System nach einem der vorhergehenden Ansprüche,
**dadurch gekennzeichnet, dass**
der Anteil des Alkali- oder Erdalkali-Lactamates b) 5 bis 25 Gew.-Teile beträgt.

4. System nach einem der vorhergehenden Ansprüche,
**dadurch gekennzeichnet, dass**
die Harnstoff-Verbindung a) ausgewählt ist aus der Gruppe der Verbindungen der Formel II mit x = 1 und 2.

5. System nach einem der vorhergehenden Ansprüche,
**dadurch gekennzeichnet, dass**
das Alkali-Lactamat b) ein Natrium-Lactamat ist.

6. System nach Anspruch **6**,
**dadurch gekennzeichnet, dass**
das Natrium-Lactamat Natrium-Caprolactamat oder Natrium-Laurinlactamat ist.

7. System nach einem der Ansprüche **1** bis **4**,
**dadurch gekennzeichnet, dass**
das Erdalkali-Lactamat b) ein Magnesium-Lactamat ist.

8. System nach Anspruch **7**,
**dadurch gekennzeichnet, dass**
das Magnesium-Lactamat Magnesium-Caprolactamat oder Magnesium-Laurinlactamat ist.

9. System nach einem der vorhergehenden Ansprüche,
**dadurch gekennzeichnet, dass**
der Aktivator c) ausgewählt ist aus der Gruppe lactamverkapptes Mono- und Polyisocyanat, Carbodiimid, Polycarbodiimid, N-acylierte Carbonamid-Verbindung und Oxazolin-Verbindung.

10. System nach Anspruch **9**,
**dadurch gekennzeichnet, dass**
die Oxazolin-Verbindung ausgewählt ist aus der Gruppe Oxazolin-Derivate und Oxazoline.

11. System nach Anspruch **10,**
**dadurch gekennzeichnet, dass**
die Oxazolin-Derivate ausgewählt sind aus der Gruppe Oxazolone, N-substituierte 2-Oxazolidone, Fettalkyl-oxazoline und mit Hydroxisäuren hergestellte Oxazoline und ihre Umsetzungsprodukte mit Isocyanaten.

12. System nach einem der vorhergehenden Ansprüche,
**dadurch gekennzeichnet, dass**
die cyclischen Carbonsäureamide ausgewählt sind aus der Gruppe Butyrolactam, Valerolactam, Caprolactam, Önanthlactam und Laurinlactam, C1- bis C12-alkyliertes Butyro-, Valero- Capro-, Önantho- und Laurinlactam, N-Acetylanilin, N-Acetylpiperidin und diacyliertes Piperazin.

13. System nach einem der Ansprüche **1** bis **11**,
**dadurch gekennzeichnet, dass**
die Additive e) ausgewählt sind aus der Gruppe Amine, Polyamine, schwerflüchtige Alkohole, Glykole, Carbonsäureester, Ester von Säuren des Phosphors, Lichtstabilisatoren, Hitzestabilisatoren, optische Aufheller, Weichmacher, Tracer, Duftstoffe und Verarbeitungshilfsmittel.

14. System nach Anspruch **1**,
erhältlich durch Umsetzung von
a) 45 bis 70 Gew.-Teilen einer N,N'-methylierten cyclischen C2- oder C3-Alkylen-Hamstoff-Verbindung,
b) 5 bis 30 Gew.-Teilen Alkali-Caprolactamat,
c) 10 bis 40 Gew.-Teilen lactamverkapptem Diisocyanat,
d) 2 bis 30 Gew.-Teilen Caprolactam.

15. System nach Anspruch **1**,
erhältlich durch Umsetzung von
a) 45 bis 70 Gew.-Teilen einer N,N'-methylierten cyclischen C2- oder C3-Alkylen-Harnstoff-Verbindung,
b) 5 bis 40 Gew.-Teilen Alkali-Lactamat,
c) 10 bis 40 Gew.-Teilen Mono-, Di- oder Polycarbodiimid,
d) 2 bis 30 Gew.-Teilen Caprolactam.

16. System nach Anspruch **1**,
erhältlich durch Umsetzung von
a) 45 bis 70 Gew.-Teilen einer N,N'-methylierten cyclischen C2- oder C3-Alkylen-Harnstoff-Verbindung,
b) 5 bis 40 Gew.-Teilen Alkali-Lactamat,
c) 10 bis 40 Gew.-Teilen Oxazolin-Verbindung.
d) 2 bis 30 Gew.-Teilen Caprolactam

17. Verwendung des flüssigen Systems nach einem der Ansprüche **1** bis **16** in Mengen von 0,5 bis 15 Gew.-Teilen pro 100 Teile Lactam für die anionische Polymerisation von Lactam.

18. Verwendung nach Anspruch **17**,
**dadurch gekennzeichnet, dass**
das Lactam ausgewählt ist aus der Gruppe Caprolactam, Önantholactam, Laurinlactam und ihre Gemische.

## Claims

1. Liquid system for anionic lactam polymerisation, consisting of the reaction product of
a) 20 to 80 parts by wt. of at least one N,N'-disubstituted urea compound having formula I 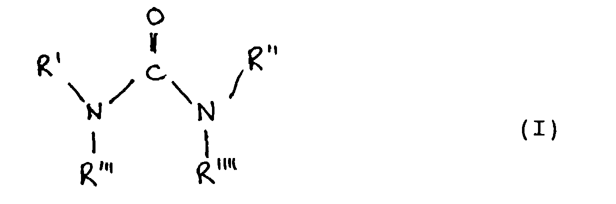 where R' and R" are identical or different alkyl radicals having up to 12 carbon atoms,
and R"' and R"" are identical or different alkyl radicals having up to 8 carbon atoms,
which if appropriate are combined with one another in accordance with formula II 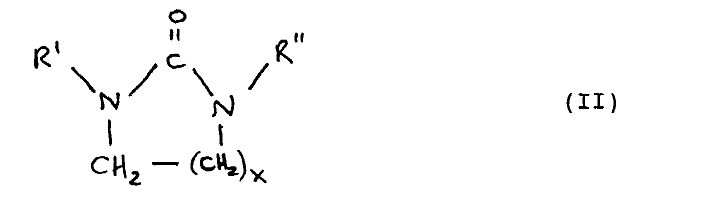 where x = 1 to 8, and R' and R" are respectively a C1 to C12 alkyl radical,
b) 5 to 40 parts by wt. of at least one alkali lactamate and/or alkaline earth lactamate,
c) 10 to 40 parts by wt. of at least one compound that acts as an activator for anionic lactam polymerisation,
d) 2 to 30 parts by wt. of at least one cyclic carboxylic acid amide,
where the proportions of a), b), c) and d) add up to 100 parts by wt. and the system is liquid at room temperature, plus
e) additional additives if appropriate.

2. System according to claim 1,
characterised in that the proportion of the urea compound a) is 30 to 70 parts by wt.

3. System according to either of the preceding claims, characterised in that the proportion of the alkali lactamate or alkaline earth lactamate b) is 5 to 25 parts by wt.

4. System according to any of the preceding claims, characterised in that the urea compound a) is selected from the group comprising formula II compounds wherein x = 1 and 2.

5. System according to any of the preceding claims, characterised in that the alkali lactamate b) is a sodium lactamate.

6. System according to claim 6,
characterised in that the sodium lactamate is sodium caprolactamate or sodium laurinlactamate.

7. System according to any of claims 1 to 4,
characterised in that the alkaline earth lactamate b) is a magnesium lactamate.

8. System according to claim 7,
characterised in that the magnesium lactamate is magnesium caprolactamate or magnesium laurinlactamate.

9. System according to any of the preceding claims, characterised in that the activator c) is selected from the group comprising lactam-capped monoisocyanate and polyisocyanate, carbodiimide, polycarbodiimide, N-acylated carbonamide compound and oxazoline compound.

10. System according to claim 9,
characterised in that the oxazoline compound is selected from the group comprising oxazoline derivatives and oxazolines.

11. System according to claim 10,
characterised in that the oxazoline derivatives are selected from the group comprising oxazolones, N-substituted 2-oxazolidones, aliphatic alkyl oxazolines and oxazolines prepared with hydroxy acids and the reaction products thereof with isocyanates.

12. System according to any of the preceding claims,
characterised in that the cyclic carboxylic acid amides are selected from the group comprising butyrolactam, valerolactam, caprolactam, enantholactam and laurinlactam, C1 to C12 alkylated butryolactam, valerolactam, caprolactam, enantholactam and laurinlactam, N-acetyl aniline, N-acetyl piperidine and diacylated piperazine.

13. System according to any of claims 1 to 11,
characterised in that the additives e) are selected from the group comprising amines, polyamines, difficultly volatile alcohols, glycols, carboxylic acid esters, esters of acids of phosphorus, light stabilisers, heat stabilisers, optical whitening agents, softeners, tracers, aromatics and processing aids.

14. System according to claim 1,
obtainable by reacting
a) 45 to 70 parts by wt. of an N,N'-methylated cyclic C2 or C3 alkylene urea compound,
b) 5 to 30 parts by wt. of alkali caprolactamate,
c) 10 to 40 parts by wt. of lactam-capped diisocyanate,
d) 2 to 30 parts by wt. of caprolactam.

15. System according to claim 1,
obtainable by reacting
a) 45 to 70 parts by wt. of an N,N'-methylated cyclic C2 or C3 alkylene urea compound,
b) 5 to 40 parts by wt. of alkali lactamate,
c) 10 to 40 parts by wt. of monocarbodiimide, dicarbodiimide or polycarbodiimide,
d) 2 to 30 parts by wt. of caprolactam.

16. System according to claim 1,
obtainable by reacting
a) 45 to 70 parts by wt. of an N,N'-methylated cyclic C2 or C3 alkylene urea compound,
b) 5 to 40 parts by wt. of alkali lactamate,
c) 10 to 40 parts by wt. of oxazoline compound,
d) 2 to 30 parts by wt. of caprolactam.

17. Use of the liquid system according to any of claims 1 to 16 in quantities of 0.5 to 15 parts by wt. per 100 parts of lactam for the anionic polymerisation of lactam.

18. Use according to claim 17,
characterised in that the lactam is selected from the group comprising caprolactam, enantholactam, laurinlactam and mixtures thereof.

## Revendications

1. Système liquide pour la polymérisation anioique de lactame, constitué du produit de réaction de
) 20 à 80 parties en poids d'au moins un composé de type urée N,N'-disubstituée de formule I 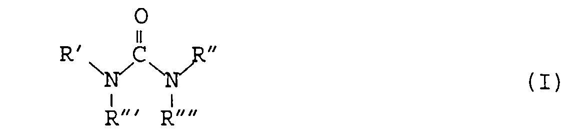 dans laquelle R' et R" sont des radicaux alkyle identiques ou différents, ayant jusqu'à 12 atomes de carbone,
et R"' et R"" sont des radicaux alkyle identiques ou différents ayant jusqu'à 8 atomes de carbone,
qui sont éventuellement liés l'un à l'autre selon la formule II, 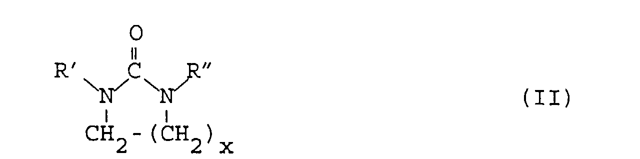 dans laquelle x = 1 à 8 et R' ou R" est un radical alkyle en C₁-C₁₂,
b) 5 à 40 parties en poids d'au moins un lactamate alcalin et/ou alcalino-terreux,
c) 10 à 40 parties en poids d'au moins un composé agissant en tant qu'activateur pour la polymérisation anionique de lactame,
d) 2 à 30 parties en poids d'au moins un carboxamide cyclique,
les proportions de a), b), c) et d) constituant au total 100 parties en poids, et le système étant liquide à la température ambiante, et
e) éventuellement d'additifs supplémentaires.

2. Système selon la revendication 1, caractérisé en ce que la proportion du composé de type urée a) va de 30 à 70 parties en poids.

3. Système selon l'une des revendications précédentes, caractérisé en ce que la proportion du lactamate alcalin ou alcalino-terreux b) va de 5 à 25 parties en poids.

4. Système selon l'une des revendications précédentes, caractérisé en ce que le composé de type urée a) est choisi dans le groupe des composés de formule II avec x = 1 et 2.

5. Système selon l'une des revendications précédentes, caractérisé en ce que le lactamate alcalin b) est un lactamate de sodium.

6. Système selon la revendication 5, caractérisé en ce que le lactamate de sodium est le caprolactamate de sodium ou le laurolactamate de sodium.

7. Système selon l'une des revendications 1 à 4,
caractérisé en ce que le lactamate alcalino-terreux b) est un lactamate de magnésium.

8. Système selon la revendication 7, caractérisé en ce que le lactamate de magnésium est le caprolactamate de magnésium ou le laurolactamate de magnésium.

9. Système selon l'une des revendications précédentes, caractérisé en ce que l'activateur c) est choisi dans l'ensemble constitué par un mono- ou polyisocyanate coiffé avec un lactame, un carbodiimide, un polycarbodiimide, un composé de type carboxamide N-acylé et un composé de type oxazoline.

10. Système selon la revendication 9, caractérisé en ce que le composé de type oxazoline est choisi parmi des oxazolines et des dérivés d'oxazolines.

11. Système selon la revendication 10, caractérisé en ce que les dérivés d'oxazolines sont choisis dans le groupe constitué par des oxazolones, 2-oxazolidones N-substituées, (alkyl gras)oxazolines et des oxazolines préparées avec des acides hydroxylés, et leurs produits de réaction avec des isocyanates.

12. Système selon l'une des revendications précédentes, caractérisé en ce que les carboxamides cycliques sont choisis dans l'ensemble constitué par le butyrolactame, le valérolactame, le caprolactame, l'oenantholactame et le laurolactame, un butyro-, valéro-, capro-, oenantho- et laurolactame alkylé par un groupe alkyle en C₁-C₁₂, la N-acétylaniline, la N-acétylpipéridine et une pipérazine diacylée.

13. Système selon l'une des revendications 1 à 11, caractérisé en ce que les additifs e) sont choisis dans l'ensemble constitué par les amines, polyamines, alcools peu volatiles, glycols, esters d'acides carboxyliques, esters d'acides du phosphore, photostabilisants, stabilisants thermiques, azurants optiques, plastifiants, substances fluorescentes, parfums et adjuvants de mise en oeuvre.

14. Système selon la revendication 1, pouvant être obtenu par la réaction de:
a) 45 à 70 parties en poids d'un composé de type alkylène-(C₂ ou C₃)-urée cyclique N,N'-méthylée,
b) 5 à 30 parties en poids d'un caprolactamate alcalin,
c) 10 à 40 parties en poids d'un diisocyanate coiffé par un lactame,
d) 2 à 30 parties en poids de caprolactame.

15. Système selon la revendication 1, pouvant être obtenu par la réaction de:
a) 45 à 70 parties en poids d'un composé de type alkylène-(C₂ ou C₃)-urée cyclique N,N'-méthylée,
b) 5 à 40 parties en poids d'un caprolactamate alcalin,
c) 10 à 40 parties en poids de mono-, di- ou polycarbodiimide,
d) 2 à 30 parties en poids de caprolactame.

16. Système selon la revendication 1, pouvant être obtenu par la réaction de:
a) 45 à 70 parties en poids d'un composé de type alkylène-(C₂ ou C₃)-urée cyclique N,N'-méthylée,
b) 5 à 40 parties en poids d'un caprolactamate alcalin,
c) 10 à 40 parties en poids d'une oxazoline,
d) 2 à 30 parties en poids de caprolactame.

17. Utilisation du système liquide selon l'une des revendications 1 à 16, en quantités de 0,5 à 15 parties en poids pour 5 parties en poids de lactame, pour la polymérisation anionique de lactame.

18. Utilisation selon la revendication 17, caractérisée en ce que le lactame est choisi parmi le caprolactame, l'oenantholactame, le laurolactame et des mélanges de ceux-ci.
